# EUROPÄISCHE PATENTSCHRIFT

(11) **EP 1 333 219 B1**
(45) Veröffentlichungstag und Bekanntmachung des Hinweises auf die Patenterteilung: **09.02.2005**
(21) Anmeldenummer: 02023844.0
(22) Anmeldetag: 24.10.2002
(51) Int. Cl.: F16L 37/088, F28F 9/04, F28F 9/06

(54) **Schnellverschlusskupplung**
Quick acting coupling
Raccord à action rapide

(30) Priorität: 30.01.2002 DE 10203521
(43) Veröffentlichungstag der Anmeldung: 06.08.2003
(73) Patentinhaber: Modine Manufacturing Company, Racine, Wisconsin 53403-2552 (US)
(72) Erfinder: Lamich, Bernhard, Dipl.-Ing., 73734 Esslingen (DE)
(74) Vertreter: Wolter, Klaus-Dietrich

(56) Entgegenhaltungen:
- EP-A- 0 491 219
- DE-A- 3 837 492
- DE-C- 10 017 679
- US-A- 5 062 478
- US-A- 5 228 724

## Beschreibung

Die Erfindung betrifft eine Schnellverschlusskupplung zum Anschluss einer Zu - oder Abführleitung an die Wand des Sammelkastens eines Wärmetauschers, bestehend aus einem kastenseitigen Kupplungsteil und einem leitungsseitigen Kupplungsteil, mit einer radial inneren Umfangswand, die eine Ringnut mit einem Dichtring aufweist und mit einer radialen Außenwand, in der ein Haltebügel in einem Schlitz angeordnet ist, und das kastenseitige Kupplungsteil weist eine erste radiale Umfangswand auf, die am Dichtring anliegt, und es weist Einraststellen auf, in die der Haltebügel einrasten kann, wobei die Ringnut mit dem Dichtring und die Einraststellen für den Haltebügel einen radialen Abstand voneinander aufweisen.
Eine derartige Schnellverschlusskupplung ist vor einigen Monaten in der DE 100 17 679 C1 veröffentlicht worden. In dieser Veröffentlichung ist kein axialer Abstand zwischen der Nut, in die der Haltebügel einrastet und der Ringnut, in der sich der Dichtring befindet, vorgesehen, d. h., sie befinden sich auf der selben radialen Ebene. Eine solche Ausbildung kann als vorteilhaft bezeichnet werden, weil sie eine kompakte, raumsparende Ausbildung der Schnellverschlusskupplung gestattet, die deshalb beim Einsatz in Kraftfahrzeugen den Forderungen der Fahrzeughersteller entgegen kommt. Eine kompakte Gestaltung wird auch noch dann erreicht, wenn zwischen der Nut und der Ringnut ein geringer, im Millimeterbereich liegender, axialer Abstand vorhanden ist.
In der DE 199 57 946 A1 ist zwischen der erwähnten Ringnut und der Nut ein sehr deutlicher axialer Abstand vorhanden, aber kein radialer Abstand vorgesehen, so dass die dort gezeigte Ausbildung in axialer Richtung raumgreifender ist. Dies ist insbesondere dann nicht günstig, wenn der Stutzen als Winkelstutzen ausgebildet werden soll. Der dort gezeigte Anschlußstutzen ist speziell für einen Wärmeübertrager mit einem metallischen Sammelkasten ausgebildet worden. Für Wärmeübertrager mit Sammelkästen aus Kunststoff ist die dort gezeigte Lösung demzufolge nicht geeignet.
Die zuerst beschriebene Lösung wiederum kann nur mit wesentlichen, d.h. aufwendigen Änderungen auf Wärmetauscher mit Sammelkästen aus Metall übertragen werden, weil sie speziell für Lösungen in Kunststoff gedacht ist.

Die Aufgabe der Erfindung besteht in der Schaffung einer Schnellverschlusskupplung, die solche Merkmale aufweisen soll, dass sie für Wärmetauscher mit Sammelkästen aus Metall und für Sammelkästen aus Kunststoff geeignet ist, ohne dass wesentliche Änderungen an den Kupplungsteilen vorgenommen werden müssen.
Diese Aufgabe wird erfindungsgemäß mit den kennzeichnenden Merkmalen aus Anspruch 1 gelöst. Es wurde herausgefunden, dass, wenn auch das kastenseitige Kupplungsteil zwei radial beabstandete Wände aufweist, dann das leitungsseitige Kupplungsteil, also der Anschlussstutzen, unverändert bleiben kann, egal, ob das kastenseitige Kupplungsteil an Sammelkästen aus Kunststoff oder an Sammelkästen aus Metall ausgebildet ist. Die kennzeichnenden Merkmale im Anspruch 1 sind so gewählt worden, dass sie sowohl für Sammelkästen aus Kunststoff als auch für Sammelkästen aus Metall realisierbar sind. Da nur das kastenseitige Kupplungsteil anzupassen ist, ergibt sich ein geringer Aufwand, um dasselbe entweder aus Kunststoff oder aus Metall auszubilden. In beiden Fällen sind die beiden Wände des kastenseitigen Kupplungsteils günstig herstellbar. Die geschlossene erste Umfangswand kann bei der Ausführung in Metall durch
Umformung des Randes der Öffnung in der Wand des Sammelkastens leicht realisiert werden. Die zweite Wand wird als Zusatzteil realisiert, das um die Öffnung mit der geschlossenen Umfangswand herum angeordnet wird, vorzugsweise wird das Zusatzteil beim Löten des Wärmetauschers an die Wand desselben angelötet. (Anspruch 4)
Die geschlossene Umfangswand des kastenseitigen Kupplungsteils wirkt an ihrer radialen Außenseite mit dem Dichtring in der Ringnut an der radial inneren Umfangswand des leitungsseitigen Kupplungsteils zusammen, wodurch die Dichtigkeit der Schnellverschlusskupplung garantiert wird. Dies ist auch vor allem deshalb sehr wirksam, weil bei der Ausführung des Sammelkastens aus Metall, das in der Regel lotbeschichtetes Aluminium ist, auf der Außenseite des Sammelkastens keine Lotbeschichtung vorgesehen ist. Die Außenseite des Sammelkastens ist gleichzeitig auch die radiale Außenseite der Umfangswand, die somit eine sichere Abdichtung gestattet.
Bei der Ausführung des Sammelkastens aus Kunststoff lassen sich beide Wände durch entsprechende konstruktive Gestaltung des Spritzgusswerkzeuges realisieren, d. h., an die Wand des Sammelkastens anformen. (Anspruch 3)
Beide Wände des kastenseitigen Kupplungsteils besitzen bei aus Kunststoff bestehenden Sammelkästen an ihren zum leitungsseitigen Kupplungsteil weisenden Enden eine geeignete Phase oder Abschrägung, um zu garantieren, dass das leitungsseitige Kupplungsteil sowohl mit der Dichtung als auch mit dem Haltebügel problemlos und schnell auf das kastenseitige Kupplungsteil geschoben werden kann und sich sofort in der korrekten Funktionsstellung befindet. Bei aus Metall bestehenden Sammelkästen kann das durch konische Gestaltung der Wände des kastenseitigen Kupplungsteils an ihren zum leitungsseitigen Kupplungsteil weisenden Enden erreicht werden.
Weil nach einem erfindungsgemäßen Merkmal die Einraststellen für den Haltebügel in der zweiten Wand des kastenseitigen Kupplungsteils angeordnet sind, kann die erste Umfangswand des kastenseitigen Kupplungsteils glattwandig bleiben, denn diese hat lediglich eine Dichtfunktion, und zwar, nach einem weiteren Merkmal, eine Dichtfunktion, die zwischen der Außenseite der ersten Umfangswand und der Innenseite der inneren Umfangswand des leitungsseitigen Kupplungsteils erfüllt wird. Weil die erste Umfangswand glattwandig ist, kann sie in Metall leicht durch Umformung der Wand des Sammelkastens realisiert und in Kunststoff ebenfalls einfach und leicht durch entsprechende Gestaltung des Spritzgusswerkzeuges angeformt werden.

Gemäß Anspruch 2 ist vorgesehen, die radiale Außenwand des leitungsseitigen Kupplungsteils und die zweite Wand des kastenseitigen Kupplungsteiles mehrteilig , d. h., nicht geschlossen, auszubilden, wobei die Teile der Außenwand zueinander und die Teile der Wand zueinander diametral und die Teile der Außenwand zu den Teilen der Wand ebenfalls diametral angeordnet sind und wobei sie bogenförmig ausgebildet sind. Durch diese Maßnahme wird erreicht, dass der erforderliche Bauraum für die Schnellkupplung gering gehalten wird.
Bezüglich weiterer Merkmale wird auf die Ansprüche und auf die nachfolgende Beschreibung verwiesen.

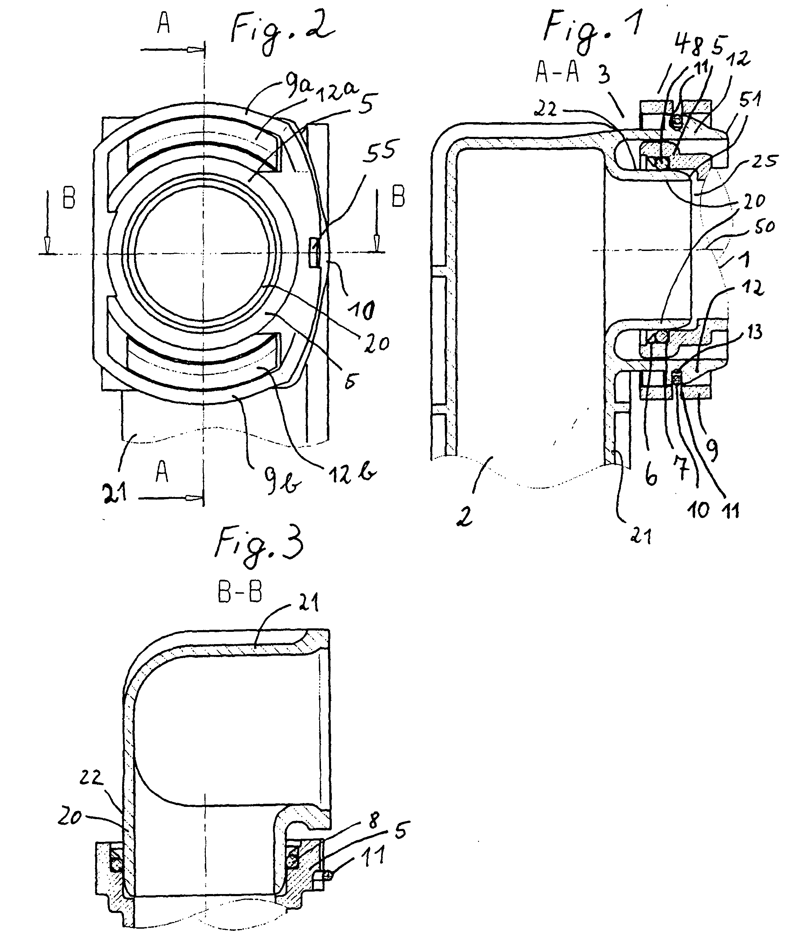

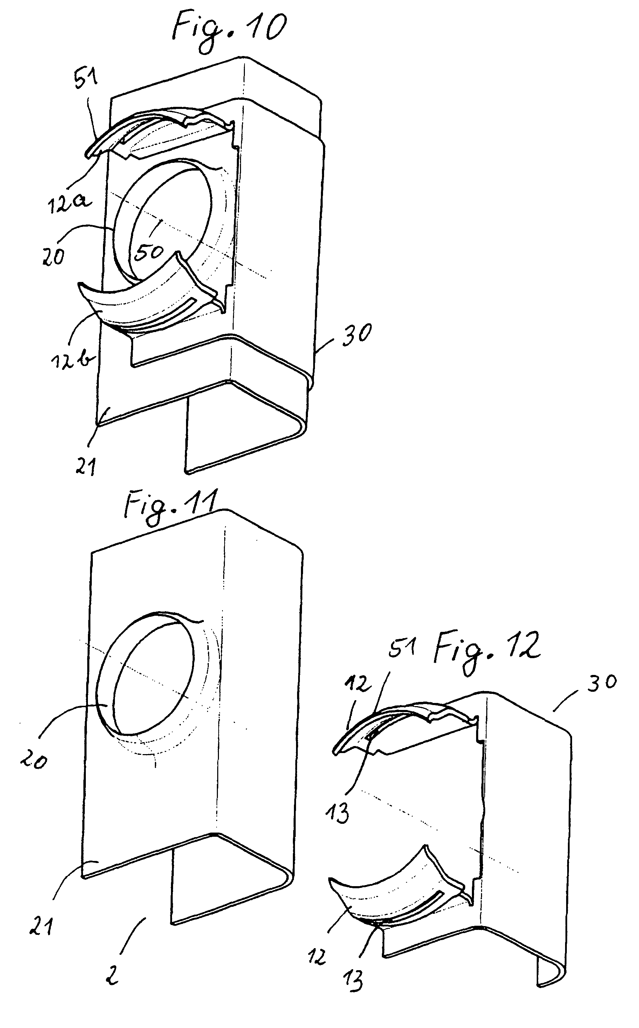

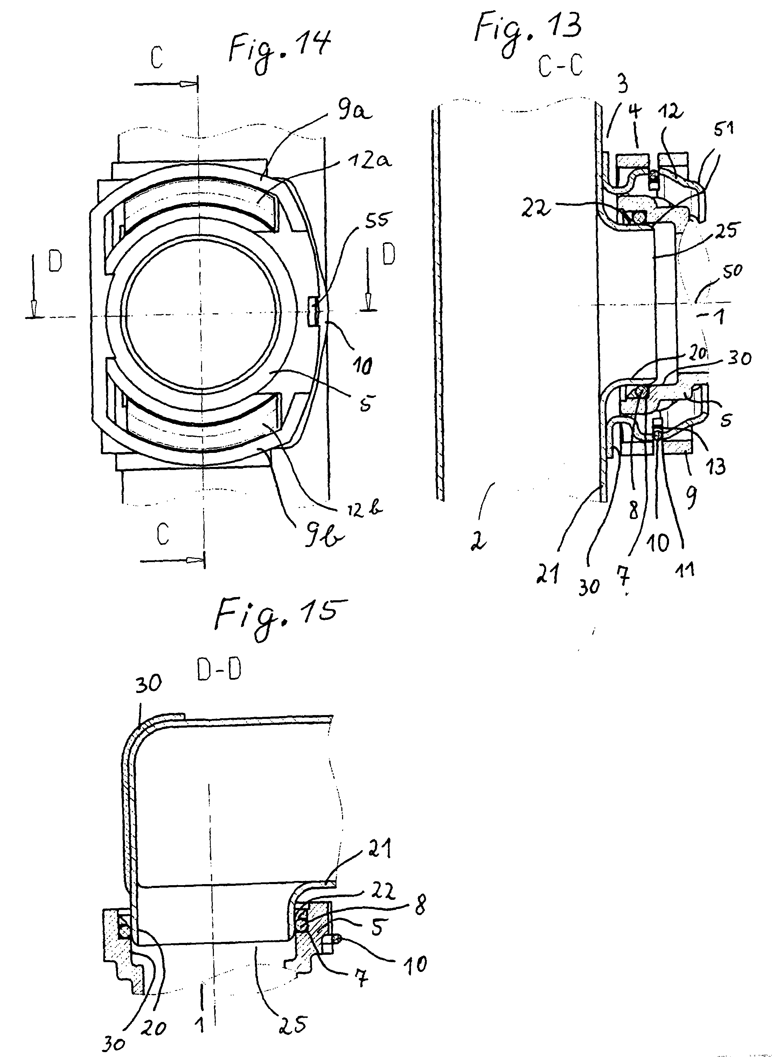

Die Erfindung soll anschließend anhand der beigefügten Zeichnungen näher erläutert werden.
Die Figuren zeigen Folgendes:
Fig. 1 den Schnitt A-A durch einen Teil des Sammelkastens mit der Kupplung;
Fig. 2 eine Ansicht auf die Kupplung;
Fig. 3 Schnitt B-B aus Fig. 2;
Fig. 4 perspektivische Ansicht auf das kastenseitige Kupplungsteil;
Fig. 5 perspektivische Ansicht auf das leitungsseitige Kupplungsteil;
Fig. 6 perspektische Ansicht der zusammengefügten Kupplungsteile;
Fig. 7, 8 und 9 zeigen perspektivische Ansichten einer weiterbildenden Ausführungsform;
Fig. 10, 11, und 12 zeigen perspektivische Ansichten einer alternativen Ausbildung;
Fig. 13, 14 und 15 zeigen eine Ansicht und Schnittdarstellungen der alternativen Ausführungsform;
Wie es bei Schnellverschlusskupplungen allgemein gefordert ist, wird die Kupplungsverbindung allein dadurch hergestellt, dass die Kupplungsteile **3** und **4** in Richtung der Achse **50** so weit zusammengedrückt werden, bis der Haltebügel **10** am leitungsseitigen Kupplungsteil **4** in den Einraststellen **13** einrastet. Im vorliegenden Fall ist beim Zusammenfügen der Kupplungsteile **3**, **4** kein Verdrehen der Kupplungsteile **3**, **4** um die Achse **50** herum erforderlich. Die Einraststellen **13** werden im Ausführungsbeispiel nach den Figuren 1 bis 9, das die Ausführung mit Sammelkästen **2** aus Kunststoff zeigt, durch eine Nut **13** in der zweiten Wand **12** des kastenseitigen Kupplungsteiles **3** realisiert. Im Ausführungsbeispiel nach den restlichen Figuren 10 bis 15, mit Sammelkästen **2** aus Metall, sind die Einraststellen **13** Schlitze **13,** weil die Wanddicke der zweiten Wand **12** in diesem Ausführungsbeispiel wesentlich geringer ist als in dem zuvor erwähnten Ausführungsbeispiel. Nichtsdestotrotz könnten auch in diesem Ausführungsbeispiel Nuten **13** in der Wand **12** eingeprägt sein, um die Einraststellen **13** zu bilden. Um das Zusammenstecken der Kupplungsteile **3** und **4** zu erleichtern, weisen die Enden der zweiten Wand **12** und der ersten radialen Umfangswand **20** eine konische Gestaltung **51** auf. Bei der Ausführung in Kunststoff wird die konische Gestaltung **51** durch die allmähliche Wanddickenreduktion erreicht (Fig. 1) und bei der Ausführung in Metall durch das Einziehen der Enden der Wand **12**, wie die Fig. 10 und 12 zeigen. Die radiale Umfangswand **20** und die zweite Wand **12** sind bei der Ausführung des Sammelkastens **2** aus Kunststoff einteilig mit der Wand **21** des Sammelkastens **2** ausgebildet. Sie werden durch entsprechende Gestaltung des nicht gezeigten Spritzgusswerkzeuges realisiert, das zur Herstellung des Sammelkastens **2** erforderlich ist.

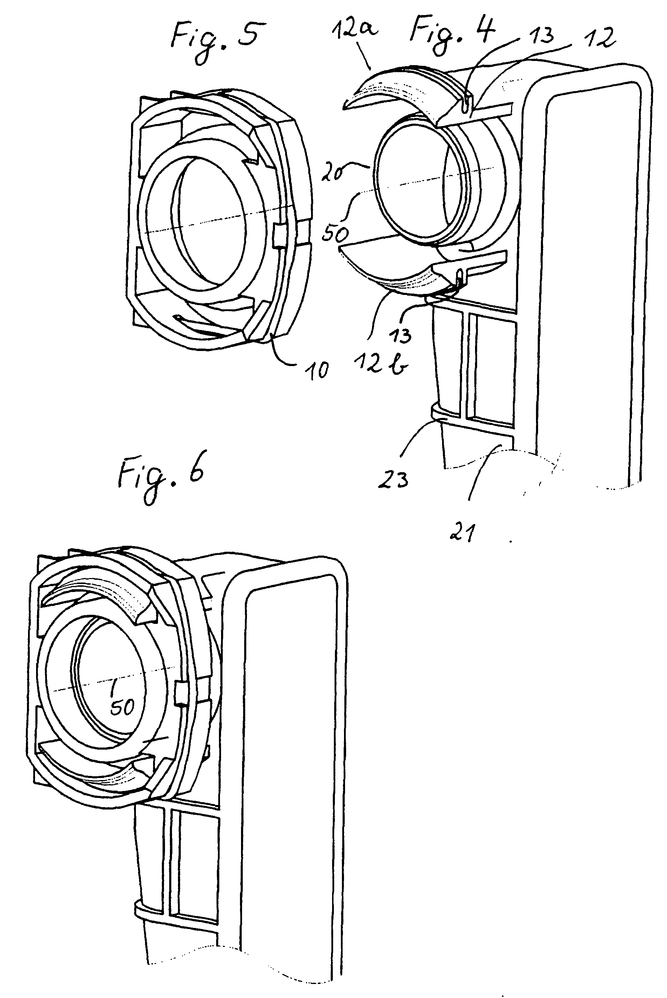

In beiden erwähnten Ausführungsbeispielen wurde die zweite Wand **12** des kastenseitigen Kupplungsteils **3** nicht als geschlossene Wand gestaltet, wie beispielsweise die Umfangswand **20** ausgeführt ist, sondern als zweiteilige Wand **12.** Die Teile wurden in den Figuren 4 und 10 mit **12a** und **12b** bezeichnet. Die Teile **12a** und **12b** sind bogenförmig, sie könnten Teile eines Kreisbogens sein, dessen Mittelpunkt die Achse **50** ist. Somit sind die Teile **12a** und **12b** koaxial zur Umfangswand **20** angeordnet. Insbesondere sind sie in Längsrichtung des Sammelkastens **2** gegenüberliegend angeordnet, wodurch eine bauraumsparende Gestaltung unterstützt wird. Eine entsprechend angepasste Gestaltung besitzt auch die radiale Außenwand **9** des leitungsseitigen Kupplungsteils **4**, wobei in den Figuren 2 und 14 die bogenartigen Teile mit **9a** und **9b** markiert wurden. Die Figuren zeigen auch, dass im zusammengesteckten Zustand sämtliche Wände **5**, **9a**, **9b**, **12a**, **12b** und **20** des kastenseitigen Kupplungsteils **3** und des leitungsseitigen Kupplungsteils **4** koaxial um die Achse **50** angeordnet sind.

Wie sehr deutlich aus den Figuren 1, 13 und 15 hervorgeht, ist zwischen dem Dichtring **8** und dem Haltebügel **10** ein radialer Abstand vorhanden. Der Dichtring **8** liegt deutlich weiter innen, d. h., weiter zur Achse **50** hin, als der Haltebügel **10**. Durch diese Gestaltung wird eine sehr kurz bauende Kupplung geschaffen, jedenfalls deutlich kürzer als im Stand der Technik, wo ein deutlicher axialer Abstand zwischen dem Dichtring **8** und dem Haltebügel **10** vorhanden ist, der zu einer größeren Baulänge in axialer Richtung führt. Durch die kurz bauende Kupplung wird ebenfalls der Hebelarm, der auf die Umfangswand **20** wirkenden Kräfte kleiner. Weil außerdem eine Entkopplung des Haltebügels **10** von der Umfangswand **20** vorgenommen wurde, werden die vom Haltebügel **10** aufzunehmenden Kräfte nicht auf die Umfangswand **20** übertragen, so dass dieselbe mit geringerer Wanddicke ausgebildet werden kann. Die geringere Wanddicke bedeutet eine Vergrößerung des Strömungsquerschnitts bei gleichem Außendurchmesser.

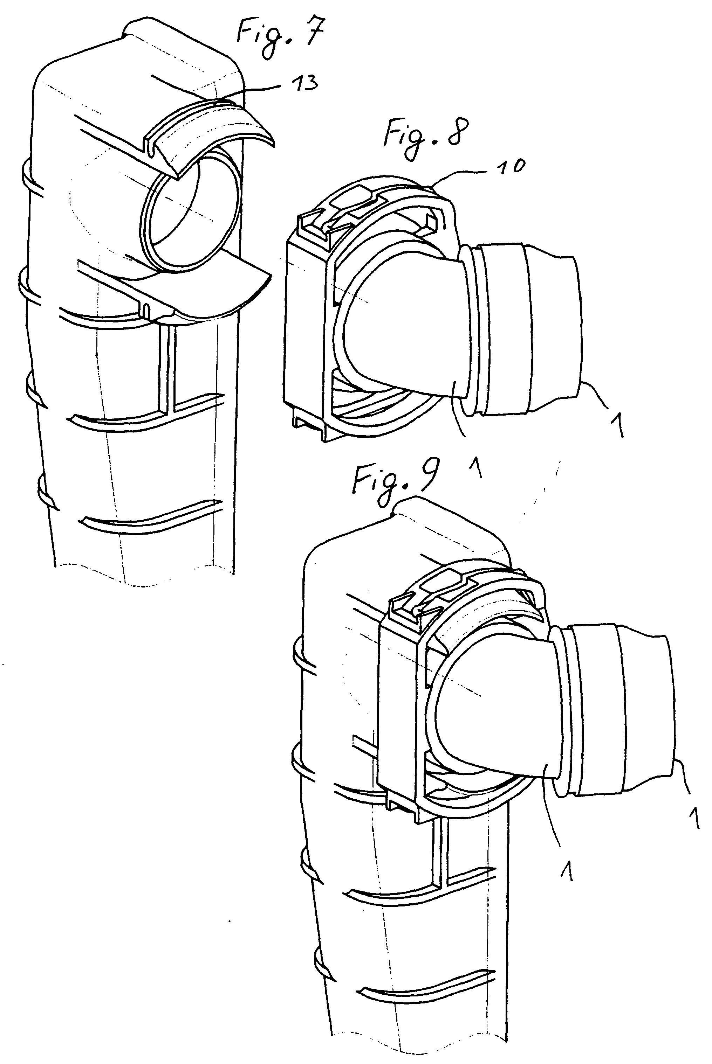

Die Fig. 4, 5 und 6 unterscheiden sich von den Fig. 7, 8 und 9 dadurch, dass im ersten Fall gerade Anschlußstutzen und im zweiten Fall gekrümmte Anschlußstutzen zur Zu - oder Abführleitung **1** hin vorgesehen wurden. Mit dem Bezugszeichen **23** wurde in der Fig. 4 eine Verstärkungsrippe an der Wand **21** des Sammelkastens **2** bezeichnet.
Mit dem Bezugszeichen **55** wurde in den Fig. 2 und 14 eine Vertiefung gekennzeichnet, die einfach dazu dient, den Haltebügel **10** aus der Verriegelungsstellung zu ziehen, wenn die Kupplungsverbindung gelöst werden muss.
Das in der Fig. 12 als Einzelteil gezeigte Zusatzteil **30** ist für die Ausführung bei Verwendung von Sammelkästen **2** aus Metall gedacht. Das Zusatzteil **30** ist u-förmig gestaltet und kann über die Wände **21** des Sammelkastens **2** geschoben und dort angelötet werden. Es muss sich in der in Fig. 10 gezeigten Position befinden, in der die Achse **50** der Mittelpunkt der zwei Kreise ist, die von den Wandteilen **12a** und **12b** am Zusatzteil **30** und von der Umfangswand **20** am Sammelkasten **2** dargestellt werden. Die radiale Umfangswand **20** wurde durch Umformung des Randes der Öffnung **25** in der Wand **21** des Sammelkastens **2** hergestellt und erstreckt sich nach außerhalb des Sammelkastens **2**. Es ist erkennbar, dass die Gestaltung des Zusatzteils **30** nicht unbedingt so wie gezeigt u-förmig und relativ großflächig sein muss. Jedenfalls muss es so ausgebildet sein, dass es sicher an der Wand **21** des Sammelkastens **2** befestigt, vorzugsweise angelötet werden kann. Das Anlöten des Zusatzteils **30** erfordert keine besonders zu erwähnenden Aufwendungen, weil es gleichzeitig mit der sowieso erforderlichen Lötoperation des Wärmetauschers vorgenommen wird.
Das leitungsseitige Kupplungsteil **4** ist für beide Ausführungsvarianten identisch. Es ist aus Kunststoff geformt. Im übrigen wurde es weiter vorne hinsichtlich der Ausbildung der radialen Außenwand **9a** und **9b** bereits beschrieben. Wie die Fig. 1 und 2 sowie 13 und 14 insbesondere noch zeigen, besitzt das leitungsseitige Kupplungsteil **4** darüber hinaus eine innere, geschlossene radiale Umfangswand **5**, die wiederum an ihrer radialen Innenseite **30** eine Ringnut **7** aufweist, in der der Dichtring **8** angeordnet ist. Die Ringnut **7** mit der Dichtung **8** befinden sich in einer solchen radialen Ebene, dass im zusammengesteckten Zustand der Kupplungsteile **3**, **4** die Dichtung **8** satt auf der radialen Außenseite **22** des Umfangsteils **20** des kastenseitigen Kupplungsteils **3** anliegt und die Dichtheit gewährleistet. Da das leitungsseitige Kupplungsteil **4** unverändert bleiben kann, sind auch die konstruktiven Merkmale des kastenseitigen Kupplungsteils 3, wie im Anspruch 1 beschrieben wurde, für beide Ausführungsvarianten identisch. Unterschiede bestehen lediglich hinsichtlich der Realisierung der Merkmale am kastenseitigen Kupplungsteil **3**.

## Patentansprüche

1. Schnellverschlusskupplung zum Anschluss einer Zu - oder Abführleitung (1) an die Wand (21) eines Sammelkastens (2) eines Wärmetauschers, bestehend aus einem kastenseitigen Kupplungsteil (3) und einem leitungsseitigen Kupplungsteil (4), das versehen ist mit einer radial inneren Umfangswand (5), die eine Ringnut (7) mit einem Dichtring (8) aufweist und mit einer radialen Außenwand (9), in der ein Haltebügel (10) in einem Schlitz (11) angeordnet ist, und das kastenseitige Kupplungsteil (3) weist eine erste radiale Umfangswand (20) auf, die am Dichtring (8) anliegt, und es weist Einraststellen (13) auf, in die der Haltebügel (10) einrasten kann, wobei die Ringnut (7) mit dem Dichtring (8) und die Einraststellen (13) für den Haltebügel (10) einen radialen Abstand voneinander aufweisen,
**gekennzeichnet dadurch, dass**
das kastenseitige Kupplungsteil (3) neben der ersten radialen Umfangswand (20) eine zweite radial davon beabstandete Wand (12) aufweist, die, im zusammengesteckten Zustand der Kupplungsteile (3, 4), in den Abstand zwischen der radialen Außenwand (9) und der radial inneren Umfangswand (5) des leitungsseitigen Kupplungsteils hineinragt,
dass die Einraststelle (13) in dieser zweiten Wand (12) des kastenseitigen Kupplungsteils (3) angeordnet ist,
dass der Dichtring (8) im zusammengesteckten Zustand an der radialen Außenseite (22) der ersten radialen Umfangswand (20) des kastenseitigen Kupplungsteils (3) anliegt und in der Ringnut (7) an der radialen Innenseite (6) der radial inneren Umfangswand (5) des leitungsseitigen Kupplungteils (4) angeordnet ist,
und dass die erste radiale Umfangswand (20) des kastenseitigen Kupplungsteils (3) einteilig mit der Wand (21) des Sammelkastens (2) ausgebildet ist und die zweite Wand (12) entweder ebenfalls einteilig mit der Wand (21) des Sammelkastens (2) ausgebildet oder als Zusatzteil (30) an der Wand (21) befestigt ist.

2. Schnellverschlusskupplung nach Anspruch 1, **dadurch gekennzeichnet, dass** die radiale Außenwand (9) des leitungsseitigen Kupplungsteils (4) und die zweite Wand (12) des kastenseitigen Kupplungsteils (3) mehrteilig, d.h. nicht geschlossen, ausgebildet sind, wobei die Teile (9a, 9b) der Außenwand (9) zueinander und die Teile (12a, 12b) der Wand (12) zueinander diametral und die Teile (9a, 9b) der Außenwand (9) zu den Teilen (12a, 12b) der Wand (12) ebenfalls diametral angeordnet und bogenförmig ausgebildet sind.

3. Schnellverschlusskupplung nach den Ansprüchen 1 und 2 und mit Sammelkästen (2), die aus Kunststoff spritzgusstechnisch herstellbar sind, **dadurch gekennzeichnet, dass** die erste radiale Umfangswand (20) des kastenseitigen Kupplungsteils (3) um eine Öffnung (25) in der Wand (21) des Sammelkastens (2) herum angeformt ist und die Teile (12a, 12b) der Wand (12) des kastenseitigen Kupplungsteils (3) ebenfalls an der Wand (21) des Sammelkastens (2) angeformt sind, wobei die Teile (12a, 12b) in Längsrichtung des Sammelkastens (2) spiegelbildlich gegenüber liegen und die Wand (12) zur Wand (20) koaxial angeordnet ist.

4. Schnellverschlusskupplung nach den Ansprüchen 1 und 2 und mit Sammelkästen aus Metall, **dadurch gekennzeichnet, dass** die erste radiale Umfangswand (20) des kastenseitigen Kupplungsteils (3) um eine Öffnung (25) in der Wand (21) des Sammelkastens (2) herum durch Umformung der Wand (21) ausgebildet ist und die Wand (12) in Form eines Zusatzteils (30) ausgebildet ist, das am Sammelkasten (2) metallisch befestigt ist und die Teile (12a, 12b) aufweist, wobei die Teile (12a, 12b) in Längsrichtung des Sammelkastens (2) spiegelbildlich gegenüber liegen und die Wand (12) zur Wand (20) koaxial angeordnet ist.

5. Schnellverschlußkupplung nach den Ansprüchen 1, 2 und 4, **dadurch gekennzeichnet, dass** das Zusatzteil (30) in Form einer Klammer oder dergleichen ausgebildet ist, die über die Wände (21) des Sammelkastens (2) geschoben werden kann und damit durch Löten verbunden ist.

6. Schnellverschlußkupplung nach einem der vorstehenden Ansprüche, **dadurch gekennzeichnet, dass** die Einraststelle (13) eine Nut oder ein Schlitz ist.

## Claims

1. Quick-action fastening coupling for the connection of a supply or discharge line (1) to the wall (21) of a header box (2) of a heat exchanger, the said coupling consisting of a box-side coupling part (3) and of a line-side coupling part (4) which is provided with a radially inner circumferential wall (5) which has an annular groove (7) with a sealing ring (8) and is provided with a radial outer wall (9) in which a holding stirrup (10) is arranged in a slot (11), and the box-side coupling part (3) having a first radial circumferential wall (20) which bears against the sealing ring (8) and having latching points (13), into which the holding stirrup (10) can latch, the annular groove (7) with the sealing ring (8) and the latching points (13) for the holding stirrup (10) being at a radial distance from one another, **characterized in that** the box-side coupling part (3) has, in addition to the first radial circumferential wall (20), a second wall (12) which is spaced apart radially from the latter and which, in the plugged-together state of the coupling parts (3, 4), projects into the clearance between the radial outer wall (9) and the radially inner circumferential wall (5) of the line-side coupling part, **in that** the latching point (13) is arranged in this second wall (12) of the box-side coupling part (3), **in that**, in the plugged-together state, the sealing ring (8) bears against the radial outer side (22) of the first radial circumferential wall (20) of the box-side coupling part (3) and is arranged in the annular groove (7) on the radial inner side (6) of the radially inner circumferential wall (5) of the line-side coupling part (4), and **in that** the first radial circumferential wall (20) of the box-side coupling part (3) is formed in one part with the wall (21) of the header box (2), and the second wall (12) either is likewise formed in one part with the wall (21) of the header box (2) or is fastened as an additional part (30) to the wall (21).

2. Quick-action fastening coupling according to Claim 1, **characterized in that** the radial outer wall (9) of the line-side coupling part (4) and the second wall (12) of the box-side coupling part (3) are of multi-part, that is to say non-closed, design, the parts (9a, 9b) of the outer wall (9) being arranged diametrically to one another and the parts (12a, 12b) of the wall (12) diametrically to one another, and the parts (9a, 9b) of the outer wall (9) likewise being arranged diametrically to the parts (12a, 12b) of the wall (12) and being of arcuate design.

3. Quick-action fastening coupling according to Claims 1 and 2 and with header boxes (2) which can be produced from plastic by injection moulding, **characterized in that** the first radial circumferential wall (20) of the box-side coupling part (3) is integrally formed around an orifice (25) in the wall (21) of the header box (2), and the parts (12a, 12b) of the wall (12) of the box-side coupling part (3) are likewise integrally formed on the wall (21) of the header box (2), the parts (12a, 12b) lying mirror-symmetrically opposite one another in the longitudinal direction of the header box (2), and the wall (12) being arranged coaxially to the wall (20).

4. Quick-action fastening coupling according to Claims 1 and 2 and with header boxes made from metal,
**characterized in that** the first radial circumferential wall (20) of the box-side coupling part (3) is produced around an orifice (25) in the wall (21) of the header box (2) as a result of deforming of the wall (21), and the wall (12) is designed in the form of an additional part (30) which is fastened metallically to the header box (2) and which has the parts (12a, 12b), the parts (12a, 12b) lying mirror-symmetrically opposite one another in the longitudinal direction of the header box (2), and the wall (12) being arranged coaxially to the wall (20).

5. Quick-action fastening coupling according to Claims 1, 2 and 4, **characterized in that** the additional part (30) is designed in the form of a staple or the like which can be pushed over the walls (21) of the header box (2), and which is connected thereto by soldering.

6. Quick-action fastening coupling according to one of the preceding claims, **characterized in that** the latching point (13) is a groove or a slot.

## Revendications

1. Raccord à action rapide pour raccorder une conduite d'amenée ou d'évacuation (1) à la paroi (21) d'une caisse collectrice (2) d'un échangeur de chaleur, constitué d'une partie de raccord (3) du côté de la caisse et d'une partie de raccord (4) du côté de la conduite, laquelle est pourvue d'une paroi périphérique (5) radiale intérieure, qui présente une rainure circulaire (7) avec une rondelle d'étanchéité (8), et d'une paroi radiale extérieure (9), dans laquelle un étrier de verrouillage (10) est disposé dans une fente (11), et la partie de raccord (3) du côté de la caisse présente une première paroi périphérique (20) radiale, qui repose sur la rondelle d'étanchéité (8), et présente des emplacements de verrouillage (13), dans lesquels l'étrier de verrouillage (10) peut se verrouiller, moyennant quoi la rainure circulaire (7) avec la rondelle d'étanchéité (8) et les emplacements de verrouillage (13) prévus pour l'étrier de verrouillage (10) présentent une distance radiale l'un de l'autre,
**caractérisé en ce que**,
la partie de raccord (3) du côté de la caisse présente à côté de la première paroi périphérique (20) radiale une deuxième paroi (12) radiale espacée de cette dernière, laquelle, lorsque les parties de raccord (3,4) sont jointes, saille à l'intérieur de l'espace entre la paroi extérieure radiale (9) et la paroi périphérique (5) radiale intérieure de la partie de raccord du côté de la conduite,
**en ce que** l'emplacement de verrouillage (13) est disposé dans ladite deuxième paroi (12) de la partie de raccord (3) du côté de la caisse,
**en ce que** la rondelle d'étanchéité (8) à l'état assemblé repose sur la face extérieure (22) radiale de la première paroi périphérique (20) radiale de la partie de raccord (3) du côté de la caisse et est disposée dans la rainure circulaire (7) sur la face intérieure (6) radiale de la paroi périphérique (5) radiale intérieure de la partie de raccord (4) du côté de la conduite,
et **en ce que** la première paroi périphérique (20) radiale de la partie de raccord (3) du côté de la caisse est configurée en un seul élément avec la paroi (21) de la caisse collectrice (2) et la deuxième paroi (12) est soit configurée de la même manière en un seul élément avec la paroi (21) de la caisse collectrice (2), soit fixée comme une partie additionnelle (30) sur la paroi (21).

2. Raccord à action rapide selon la revendication 1, **caractérisé en ce que** la paroi extérieure radiale (9) de la partie de raccord (4) du côté de la conduite et la deuxième paroi (12) de la partie de raccord (3) du côté de la caisse sont configurées en plusieurs parties, c'est à dire non fermées, moyennant quoi les parties (9a, 9b) de la paroi extérieure (9) sont dirigées l'une vers l'autre et les parties (12a, 12b) de la paroi (12) sont dirigées diamétralement l'une vers l'autre et les parties (9a, 9b) de la paroi extérieure (9) sont également dirigées diamétralement vers les parties (12a, 12b) de la paroi (12) et sont configurées en forme d'arc.

3. Raccord à action rapide selon les revendications 1 et 2 et comportant des caisses collectrices (2), qui sont produites par moulage par injection de plastique sous pression, **caractérisé en ce que** la première paroi périphérique (20) radiale de la partie de raccord (3) du côté de la caisse est façonnée autour d'une ouverture (25) dans la paroi (21) de la caisse collectrice (2) et les parties (12a, 12b) de la paroi (12) de la partie de raccord (3) du côté de la caisse sont également façonnées sur la paroi (21) de la caisse collectrice (2), moyennant quoi les parties (12a, 12b) se reflètent en vis à vis dans la direction longitudinale de la caisse collectrice (2) et la paroi (12) est disposée coaxialement par rapport à la paroi (20).

4. Raccord à action rapide selon les revendications 1 et 2 et comportant des caisses collectrices en métal, **caractérisé en ce que** la première paroi périphérique (20) radiale de la partie de raccord (3) du côté de la caisse est réalisée autour d'une ouverture (25) dans la paroi (21) de la caisse collectrice (2) par la déformation de la paroi (21) et la paroi (12) est réalisée sous la forme d'une partie additionnelle (30), qui est fixée métalliquement à la caisse collectrice (2) et présente les parties (12a, 12b), moyennant quoi les parties (12a, 12b) se reflètent en vis à vis dans la direction longitudinale de la caisse collective (2) et la paroi (12) est disposée coaxialement par rapport à la paroi (20).

5. Raccord à action rapide selon les revendications 1, 2 et 4, **caractérisé en ce que** la partie additionnelle (30) est configurée sous la forme d'une agrafe ou similaire, qui peut coulisser le long des parois (21) de la caisse collectrice (2) et qui est reliée à ces dernières par soudure.

6. Raccord à action rapide selon l'une des revendications précédentes, **caractérisé en ce que** l'emplacement de verrouillage (13) est une rainure ou une fente.
